# EUROPEAN PATENT APPLICATION

(11) **EP 3 351 458 A1**
(43) Date of publication of application: **25.07.2018**
(21) Application number: 17169452.4
(22) Date of filing: 04.05.2017
(51) Int. Cl.: B62D 11/24

(54) **BRAKE ASSISTED TURNING**

(30) Priority: 19.01.2017 US 201715410436
(71) Applicant: Hyster-Yale Group, Inc., Fairview, OR 97024 (US)
(72) Inventor: SMITH, Brian L., Fairview, OR 97024 (US); STAGER, Jason R., Fairview, OR 97024 (US)
(74) Representative: Hess, Peter K. G.

(57) **Abstract**

A vehicle steering system (200) includes a steer detection apparatus configured to detect a steered position of a steer wheel assembly (22, 24) relative to a steer axle (20). The steered position corresponds to a direction of turn of a vehicle (100). A brake actuator (32, 34) is configured to actuate a braking system (30) of the vehicle, and the braking system is configured to brake a first drive wheel assembly (12) independently from a second drive wheel assembly (14) mounted to a drive axle (10). The first drive wheel assembly (12) is located on a side of the vehicle corresponding to the direction of turn. The system further includes a linkage assembly (232, 234) operatively coupling the steer detection apparatus to the brake actuator. In response to the steered position detected by the steer detection apparatus, the brake actuator actuates the braking system to brake the first drive wheel assembly.

## Description

### TECHNICAL FIELD

This application relates to the field of vehicle steering and braking systems, including steering and braking systems configured for use with industrial vehicles such as forklifts.

### BACKGROUND

Certain types of known vehicle brake systems may include a hydraulic braking system or a mechanical braking system. In industrial vehicles such as forklifts, the vehicle may comprise both a service brake and a parking brake. One or both of the service brake and parking brake may be hydraulically actuated or mechanically actuated. When the operator presses on a park brake pedal, pulls a brake lever, or otherwise actuates the parking brake, the mechanical or hydraulic brake system may be actuated in order to engage the parking brake. In many vehicles, the parking brake may not be engaged with the same regularity as the service brake, as the parking brake may primarily be applied when the vehicle is parked or otherwise intended to remain motionless for an extended period of time.

Hydraulic braking systems may be more complicated and/or costly to manufacture as compared to mechanical braking systems, and may require additional maintenance and/or inspections. On the other hand, known types of mechanical braking systems which rely on differential braking, for example, may provide for a reduction in braking force on both wheels when only one wheel has lost traction, such as when the vehicle is travelling on wet, icy, uneven or loose ground. In some types of mechanical/differential braking systems, one wheel may slip or even turn in reverse when the brake is being applied.

When operating or maneuvering industrial vehicles in confined spaces, which may often be required in warehouse and other operating conditions, fine control of the steering operation of the vehicle may be inhibited when one or more of the wheels do not behave in an expected manner.

This application addresses these and other problems.

### SUMMARY

A vehicle steering system is disclosed herein. The system may include a steer detection apparatus configured to detect a steered position of a steer wheel assembly relative to a steer axle. The steered position corresponds to a direction of turn of a vehicle. A brake actuator may be configured to actuate a braking system of the vehicle, and the braking system may be configured to brake a first drive wheel assembly independently from a second drive wheel assembly mounted to a drive axle. The first drive wheel assembly may comprise an inner drive wheel assembly located on a side of the vehicle corresponding to the direction of turn, and the second drive wheel assembly may comprise an outer drive wheel assembly mounted on an opposite end of the drive axle from the first drive wheel assembly. The system may further include a linkage assembly operatively coupling the steer detection apparatus to the brake actuator. In response to the steered position detected by the steer detection apparatus, the brake actuator may be configured to actuate the braking system to brake the first drive wheel assembly.

A method of steering a vehicle comprising a steer axle and a drive axle is disclosed herein. The method may comprise detecting a steered position of a steer wheel assembly relative to the steer axle. The steered position may correspond to a direction of turn of a vehicle. In response to detecting the steered position of the steer wheel assembly, a braking system may be actuated to brake a first drive wheel assembly independently from a second drive wheel assembly mounted to the drive axle. The first drive wheel assembly may comprise an inner drive wheel assembly located on a side of the vehicle corresponding to the direction of turn. The second drive wheel assembly may comprise an outer drive wheel assembly located on an opposite side of the vehicle.

Additionally, an apparatus and/or system is disclosed herein, including means for performing the above described method.

### BRIEF DESCRIPTION OF THE DRAWINGS

FIG. 1 illustrates a simplified top view of an example industrial vehicle.
FIG. 2A illustrates an example steering system configured to perform a left-hand turn of the vehicle of FIG. 1.
FIG. 2B illustrates the example steering system configured to perform a right-hand turn.
FIG. 3A illustrates an example park brake turn assist apparatus.
FIG. 3B illustrates the example park brake turn assist apparatus of FIG. 3A in a first steering operation.
FIG. 3C illustrates the example park brake turn assist apparatus of FIG. 3A in a second steering operation.
FIG. 4 illustrates an example park brake actuator.
FIG. 5A illustrates another example park brake turn assist apparatus.
FIG. 5B illustrates the example park brake turn assist apparatus of FIG. 5A in a first steering operation.
FIG. 5C illustrates the example park brake turn assist apparatus of FIG. 5A in a second steering operation.
FIG. 6 illustrates a schematic example vehicle braking system configured to provide brake assisted steering.
FIG. 7 illustrates an example process of applying brake assisted steering.
FIG. 8 illustrates yet another example park brake turn assist apparatus.

### DETAILED DESCRIPTION

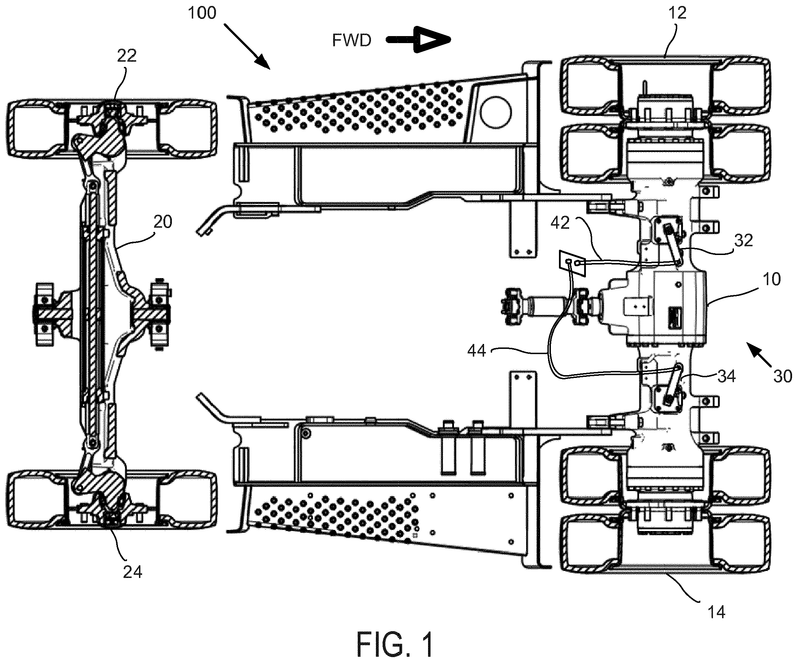

FIG. 1 illustrates a simplified top view of an example industrial vehicle 100 comprising a drive axle 10 and a steer axle 20. In some examples, the vehicle 100 may comprise an industrial vehicle such as a forklift which may be configured to operate in a forward direction FWD associated with the drive axle 10 in a front facing direction, as well as in a reverse direction opposite the forward direction FWD.

The drive axle 10 may comprise a plurality of drive wheels, including a left side drive wheel assembly 12 and a right side drive wheel assembly 14. The drive wheel assemblies 12, 14 are illustrated as each including two drive wheels, or dual drive wheels, however in other examples each drive wheel assembly may comprise a single drive wheel.

The steer axle 20 is illustrated as comprising a left side steer wheel assembly 22 and a right side steer wheel assembly 24. In some examples, steer wheel assemblies 22, 24 may not be driven, and may be understood to generally rotate freely during vehicle travel. The steer axle 20 may be configured to cause both steer wheel assemblies 22, 24 to pivot to the left and/or right sides during a steering operation, while the drive wheel assemblies 12, 14 may remain in a substantially non-pivoted position or straight forward orientation.

A braking system 30 may be configured to brake one or both of the left side drive wheel assembly 12 and the right side drive wheel assembly 14, and in some examples may comprise a parking brake of the vehicle 100. Braking system 30 may comprise a left-hand park brake lever 32 and a right-hand park brake lever 34.

The left-hand park brake lever 32 may be operably coupled to the drive axle 10. The left-hand park brake lever 32 may be configured to rotate or otherwise be actuated when a request for parking brake is made. Upon being actuated, the left-hand park brake lever 32 may be configured to engage a park brake associated with the left side drive wheel assembly 12. In some examples, the drive wheels associated with the left side drive wheel assembly 12 may be made immobile or cease rotating when the left-hand park brake lever 32 is actuated.

Similarly, the right-hand park brake lever 34 may be operably coupled to the drive axle 10. The right-hand park brake lever 34 may be configured to rotate or otherwise be actuated when a request for parking brake is made. Upon being actuated, the right-hand park brake lever 34 may be configured to engage a park brake associated with the right side drive wheel assembly 14. The drive wheels associated with the right side drive wheel assembly 14 may be made immobile or cease rotating when the right-hand park brake lever 34 is actuated.

In some modes of operation, both the left-hand park brake lever 32 and the right-hand park brake lever 34 may be actuated at or near the same time. For example, both park brake levers 32, 34 may be coupled to a park brake operator control, such as a brake pedal or a parking brake handle, by one or more cables, pulleys, switches, or other types of attachments. In some examples, a first manual park brake cable 42 may couple the left-hand park brake lever 32 to the park brake operator control, and a second manual park brake cable 44 may couple the right-hand park brake lever 34 to the park brake operator control.

Whereas the vehicle 100 may comprise a manual park brake operator control as described above, such as a park brake pedal or handle, in other examples, an automated parking brake operation may be initiated by the vehicle 100 or by a vehicle management system when certain conditions apply. For example, the vehicle 100 may be configured to automatically actuate the park brake levers 32, 34 when the vehicle 100 ignition is switched off, when the vehicle 100 is stopped on an incline, when the vehicle 100 is stopped without any request for acceleration, or during other example modes of operation.

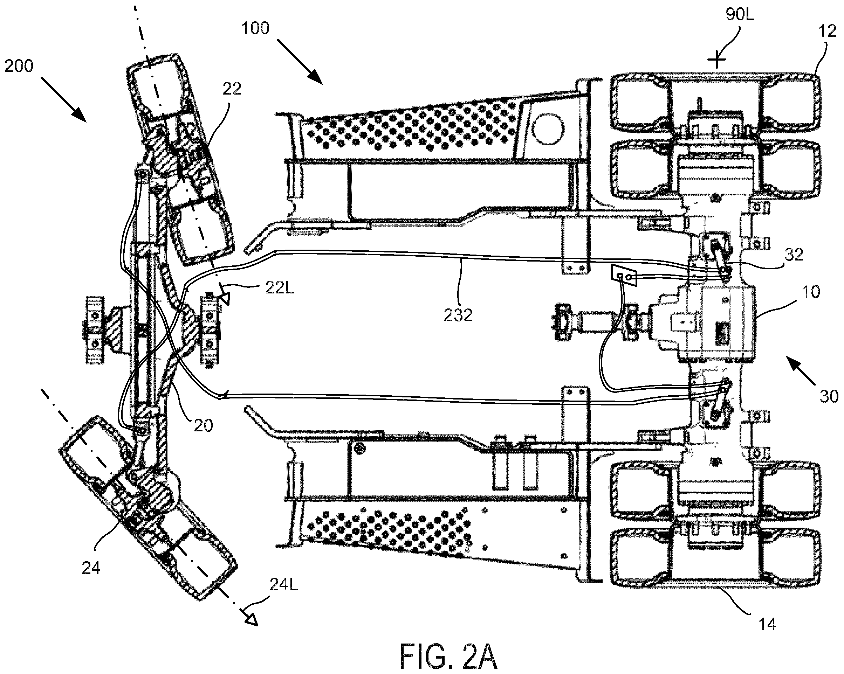

FIG. 2A illustrates an example steering system 200 configured to perform a steering operation of the vehicle 100 which may be understood as a left-hand turn in the forward direction. The example steering operation is illustrated with the steer wheel assemblies 22, 24 pivoted or rotated to a maximum clockwise orientation relative to the steer axle 20. In some examples the maximum clockwise orientation, and conversely the maximum counter-clockwise orientation of the steer wheel assemblies 22, 24, may be associated with a lock-to-lock position of a steering control, such as an operator controlled steering wheel located in an operator compartment.

With the steer wheel assemblies 22, 24 located in the maximum clockwise orientation, the vehicle 100 may generally turn to the left about a steer center 90L located at or near the left side drive wheel assembly 12. The steering path of the left side steer wheel assembly 22 is shown by path 22L and the steering path of the right side steer wheel assembly 24 is shown by path 24L. In some examples, the left side drive wheel assembly 12 may generally be understood to pivot in place about the steer center 90L.

The steering system 200 may comprise a left-hand park brake turn assist cable 232 operably coupled to the left-hand park brake lever 32. In some examples, the left-hand park brake turn assist cable 232 may be configured to actuate the left-hand park brake lever 32 during the left-hand turn. For example, the steering system 200 may be configured to engage the braking system 30 during the left-hand turn such that the left side drive wheel assembly 12 is held substantially immobile and/or prohibited from rotating about the drive axle 10.

In some examples, the steering system 200 may be configured to selectively actuate the left-hand park brake lever 32 via the left-hand park brake turn assist cable 232, such that the parking system 30 only causes the left side drive wheel assembly 12 to brake, while the right side drive wheel assembly 14 is not prohibited from rotating about the drive axle 10. Still further, vehicle 100 may be configured to cause the right side drive wheel assembly 14 to rotate under power about the drive axle 10 while the parking brake is applied to the left side drive wheel assembly 12.

During the left-hand turn, the left side drive wheel assembly 12 may be understood as comprising an inside drive tire or inside drive tires. Applying the park brake to the inside drive tire(s) may operate to decrease the effective turning radius of the vehicle. For example, locking the inside drive tire(s) using independent wheel braking during tight turns may significantly reduce the vehicle turn radius. In some examples, the steering system 200 may be configured to actuate braking of the inside turn drive wheel(s) only during minimum turning radius operations.

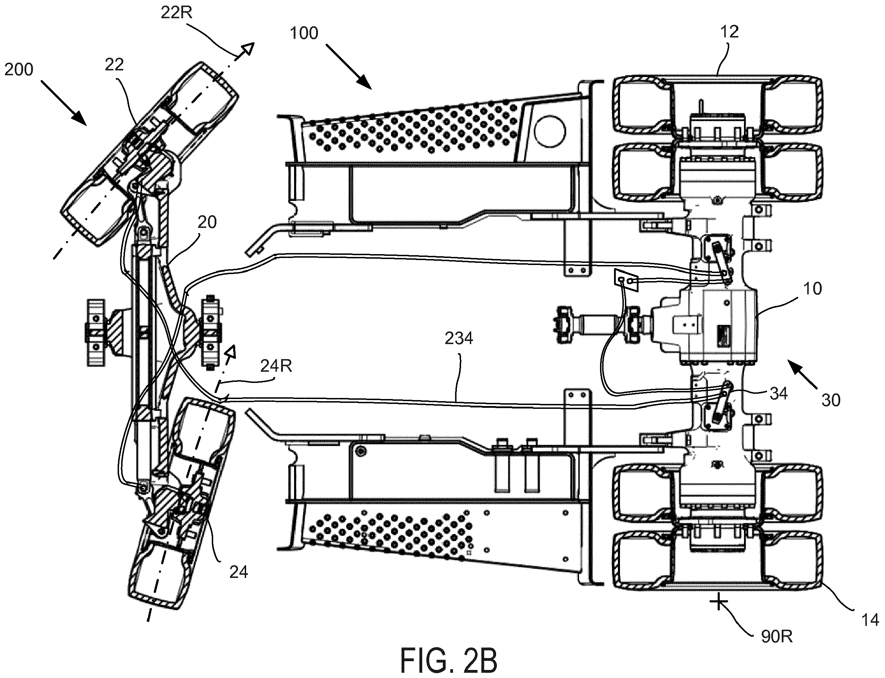

FIG. 2B illustrates the example steering system 200 configured to perform a steering operation of the vehicle 100 which may be understood as a right-hand turn in the forward direction. The example steering operation is illustrated with the steer wheel assemblies 22, 24 pivoted or rotated to a maximum counter-clockwise orientation relative to the steer axle 20.

With the steer wheel assemblies 22, 24 located in the maximum counter-clockwise orientation, the vehicle 100 may generally turn to the right about a steer center 90R located at or near the right side drive wheel assembly 14. The steering path of the right side steer wheel assembly 24 is shown by path 24R, and the steering path of the left side steer wheel assembly 22 is shown by path 22R. In some examples, the right side drive wheel assembly 14 may generally be understood to pivot in place about the steer center 90R.

The steering system 200 may comprise a right-hand park brake turn assist cable 234 operably coupled to the right-hand park brake lever 34. In some examples, the right -hand park brake turn assist cable 234 may be configured to actuate the right-hand park brake lever 34 during the right-hand turn. For example, the steering system 200 may be configured to engage the braking system 30 during the right-hand turn such that the right side drive wheel assembly 14 is held substantially immobile and/or prohibited from rotating about the drive axle 10.

In some examples, the steering system 200 may be configured to selectively actuate the right-hand park brake lever 34 via the right-hand park brake turn assist cable 234, such that the parking system 30 only causes the right side drive wheel assembly 14 to brake, while the left side drive wheel assembly 12 is not prohibited from rotating about the drive axle 10. Still further, vehicle 100 may be configured to cause the left side drive wheel assembly 12 to rotate under power about the drive axle 10 while the parking brake is applied to the right side drive wheel assembly 14 in order to hold one or more right side drive wheels rotational immobile.

Vehicle steering system 200 may comprise a steer detection apparatus configured to detect a steered position and/or an angular displacement of one or both steer wheel assemblies 22, 24 relative to the steer axle 20. The steered position may be understood as corresponding to a direction of turn of vehicle 100. Additionally, one or more brake actuators of vehicle 100 may be configured to actuate braking system 30 as described above. For example, the braking system 30 may be configured to brake a first drive wheel assembly, such as the right side drive wheel assembly 14 independently from a second drive wheel assembly, such as the left side drive wheel assembly 12.

A linkage assembly comprising one or more cables, such as right-hand park brake turn assist cable 234 and/or left-hand park brake turn assist cable 232 (FIG. 2A) may operatively couple the steer detection apparatus to the brake actuator. In response to the steered position and/or angular displacement detected by the steer detection apparatus, the brake actuator actuates the braking system 30 to brake the inner drive wheel assembly.

The steer axle 20 may be understood as being located proximate to a first end of the vehicle 100, and the drive axle 10 may be understood as being located proximate to a second end of the vehicle 100 opposite the first end. The steer detection apparatus may be operably coupled to the steer axle 20, and the brake actuator may be operably coupled to the drive axle 10. In some examples, the linkage assembly including cables 232, 243 may substantially traverse an entire length between the steer axle 20 and the drive axle 10. Additionally, the one or more cables 232, 234 may directly couple the steer detection apparatus to the brake actuator.

The brake actuator may comprise a first brake actuator operable with the left-hand park brake lever 32, and configured to brake the left side drive wheel assembly 12. Additionally, the brake actuator may comprise a second brake actuator operable with the right-hand park brake lever 34, and configured to brake the right side drive wheel assembly 14.

The linkage assembly and/or cable 232 may be configured to operably couple a steer detection apparatus to the first brake actuator to independently brake the first drive wheel assembly, e.g. left side drive wheel assembly 12, without braking the second drive wheel assembly, e.g. the right side drive wheel assembly 14. Similarly, The linkage assembly and/or cable 234 may be configured to operably couples a steer detection apparatus to the second brake actuator to independently brake the opposite side drive wheel assembly, e.g. the right side drive wheel assembly 14, without braking the second drive wheel assembly, e.g. left side drive wheel assembly 12.

In some examples, a first steer detection apparatus may be configured to detect the steered position and/or angular displacement of a first steer wheel assembly, such as the right side steer wheel assembly 24, and a second steer detection apparatus may be configured to detect a steered position and/or an angular displacement of a second steer wheel assembly, such as the left side steer wheel assembly 22.

Additionally, the steered position of the second steer wheel assembly may be detected independently from the steered position of the first steer wheel assembly. In some examples, braking the first drive wheel assembly and braking the second drive wheel assembly may be considered mutually exclusive braking events during any one particular steering operation.

For drive wheel assemblies comprise two drive wheels or dual drive wheels, both drive wheels associated with the inner drive wheel assembly may be braked during the brake assisted steering operation. In some examples, both of the inner dual drive wheels may be braked to a complete stop while the outer set of dual drive wheels associated with the outer drive assembly are allowed to rotate and/or continue to be driven during the turn.

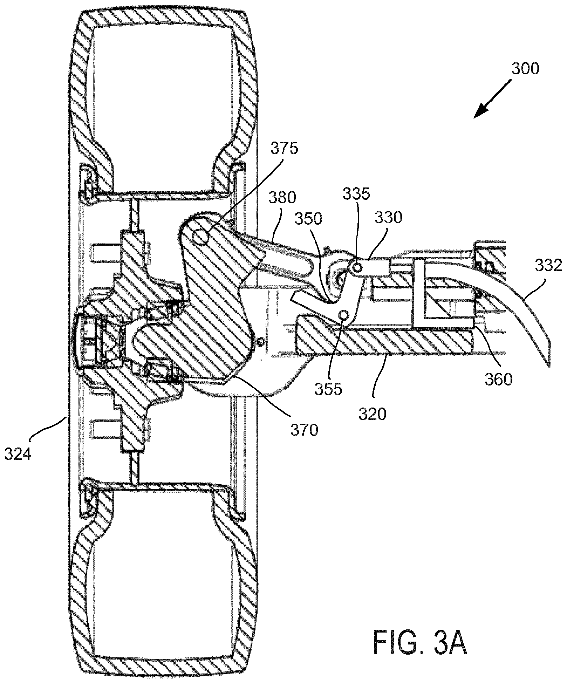

FIG. 3A illustrates an enlarged view of an example park brake turn assist apparatus 300. For illustrative purposes, park brake turn assist apparatus 300 is shown in relation to a single steer wheel assembly 324 mounted to a steer axle 320. However, it should be understood that a second steer wheel assembly may be mounted on an opposite end of steer axle 320 and, in some examples, a second park brake turn assist apparatus configured similar to park brake turn assist apparatus 300 may be associated with the second steer wheel assembly.

Park brake turn assist apparatus 300 may comprise a steer detection apparatus 350 configured as a lever arm or bell crank. Steer detection apparatus 350 may be pivotally coupled 355 to steer axle 320. Additionally, steer detection apparatus 350 may be coupled 335 to a first end 330 of a linkage cable 332. The linkage cable 332 may be coupled to the steer axle 320 by a cable bracket 360. The cable bracket 360 may be configured to securely fix a protective outer housing of linkage cable 332 with respect to the steer axle 320, while allowing for relative movement of the first end 330 relative to the outer housing. For example, first end 330 may be coupled to an inner cable which is slidably inserted within the outer housing of the linkage cable 332.

In some examples, the linkage cable 332 may be understood to operate similarly as one or both of the park brake turn assist cables 232, 234 illustrated in FIGS. 2 A and 2B, respectively. For example, linkage cable 332 may operably couple steer detection apparatus 350 with a brake actuator associated with a drive wheel located on an opposite side of the vehicle from steer wheel assembly 324.

Steer wheel assembly 324 may be pivotally coupled to steer axle 320 by a spindle 370. The spindle 370 may in turn be coupled 375 to a tie rod 380. In some examples, tie rod 380 may be mechanically and/or hydraulically actuated to turn or pivot the steer wheel assembly 324 relative to the steer axle 320, as described further herein.

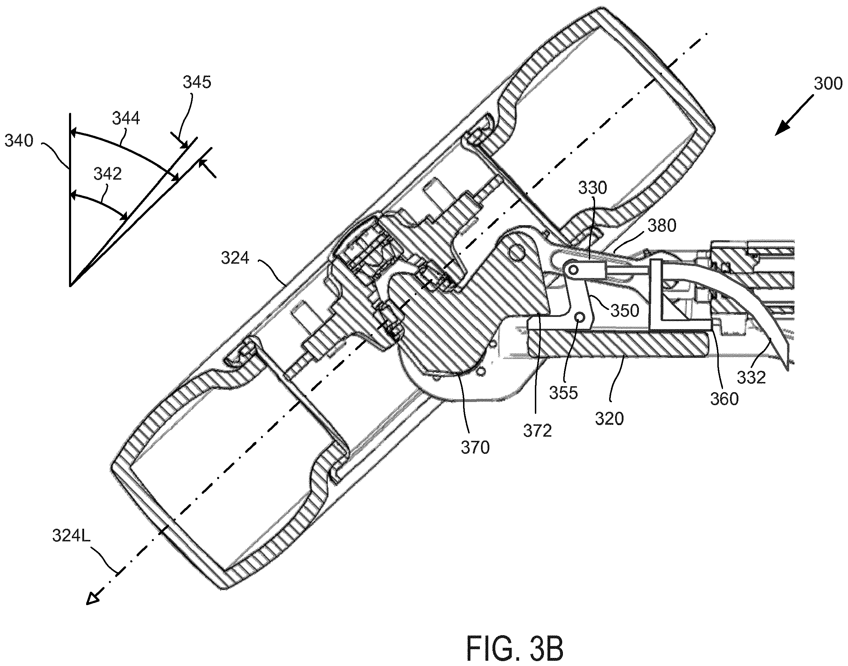

FIG. 3B illustrates the example park brake turn assist apparatus of FIG. 3A in a first steering operation. In the first steering operation, the steer wheel 324 may be understood to be turned to a steering path 324L. Steering path 324L may be associated with a maximum steering angle 344, or with a threshold steering angle 342, relative to a neutral or non-steering position 340 of the steer wheel assembly 324 (as illustrated in FIG. 3A). In some examples, steering path 324L may be associated with a left-hand turn of the vehicle.

Spindle 370 may comprise a contact surface 372 configured to contact steer detection apparatus 350 during the steering operation. In some examples, contact surface 372 may contact steer detection apparatus 350 when the steer wheel assembly 324 is at the threshold steering angle 342. Contact surface 732 may continue to contact steer detection apparatus 350 while the steer wheel assembly 324 is rotated or turned between the threshold steering angle 342 and the maximum steering angle 344.

After initially making contact with steer detection apparatus 350, and as the spindle 370 continues to turn together with the steer wheel assembly 324 during the steering operation, the steer detection apparatus 350 may be configured to rotate about pivot 355 from an initial, or non-actuated position as illustrated in FIG. 3A to the actuated position illustrated in FIG. 3B. In the actuated position, steer detection apparatus 350 may be understood to pull the first end 330 of linkage cable 332. For example, the first end 330 of linkage cable 332 may be pulled throughout a final angular range 345 of rotation of steer detection apparatus 350 during the steering operation.

As the first end 330 of linkage cable 332 is pulled, a park brake operably coupled to an opposite end of the linkage cable 332 may be configured to brake a drive wheel assembly. In some examples, the brakes may be engaged for the final angular range 345 of rotation of approximately ten or fewer degrees of angular displacement of the steer wheel assembly 324. In other examples, the brakes may be engaged for the final five or fewer degrees of angular displacement. In still other examples, the brakes may be gradually engaged over the final angular range 345 of rotation, such that a minimum amount of braking force is applied at the threshold steering angle 342 and a maximum amount of braking force is applied at the maximum steering angle 344.

In some examples, and as may be understood with further reference to FIGS. 2A and 2B, the steer detection apparatus 350 may be configured to detect a steering angle associated with a steer wheel located on one side of the vehicle, e.g., the right-hand side, and the linkage cable 332 may operably link the steer detection apparatus 350 to a park brake actuator associated with a drive wheel assembly located on the opposite side of the vehicle, e.g., the left-hand side.

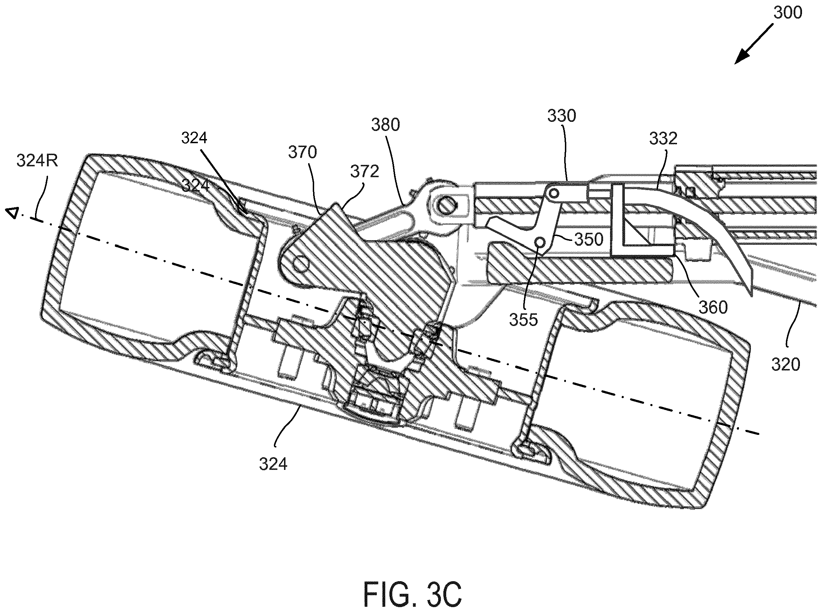

FIG. 3C illustrates the example park brake turn assist apparatus of FIG. 3A in a second steering operation. In the second steering operation, the steer wheel 324 may be understood to be turned to a steering path 324R which, in some examples, may be associated with a right-hand turn of the vehicle.

In the second steering operation, the spindle 370 may be understood to rotate away from steer detection apparatus 350, such that contact surface 372 is not in contact with steer detection apparatus 350. As contact surface 372 is not exerting any rotational force on the steer detection apparatus 350, the steer detection apparatus 350 may be understood to remain in the initial, or non-actuated position. In the non-actuated position, the first end 330 of linkage cable 332 is not being pulled by the steer detection apparatus 350. Accordingly, it may be understood that a park brake operably coupled to the opposite end of the linkage cable 332 is not engaged during the second steering operation.

While separate steer detection apparatus may be located proximate a left side steer wheel assembly and proximate a right side steer wheel assembly, respectively, in other examples one or more steer detection apparatus may be located proximate the same steer wheel assembly. For example, two steer detection apparatus similar to steer detection apparatus 350 may be located proximate to steer wheel assembly 324. One steer detection apparatus may be configured to detect when steer wheel assembly 324 is turned at or near steering path 324L, as shown in FIG. 3B, whereas another steer detection apparatus may be configured to detect when steer wheel assembly 324 is turned at or near steering path 324R, as shown in FIG. 3C.

Additionally, two linkage cables may be operably coupled to the two steer detection apparatus located proximate to the same steer wheel assembly. The two linkage cables may be operably connected to park brakes located on opposite sides of the vehicle such that one park brake is engaged when the vehicle is proximate a maximum turn in one direction and the other park brake is engaged when the vehicle is proximate a maximum turn in the opposite direction

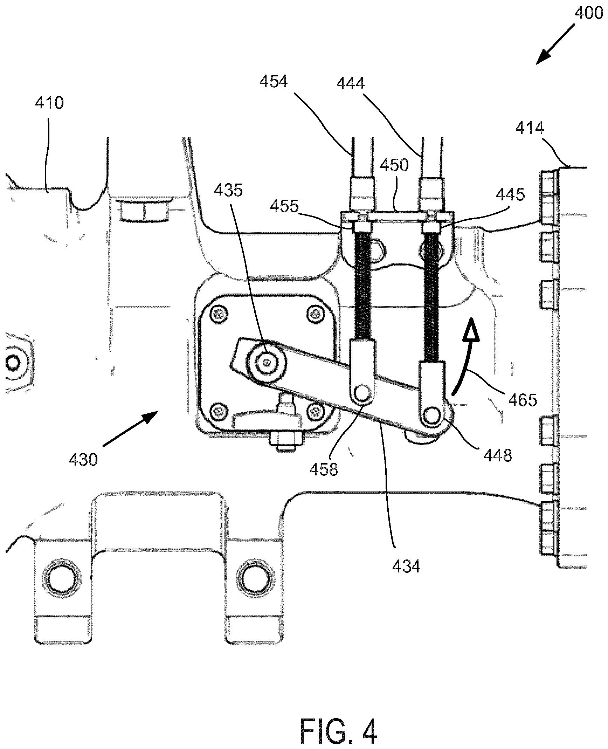

FIG. 4 illustrates an example park brake actuator 400. The park brake actuator 400 may comprise an attachment end 458 of a linkage cable 454 attached to a brake lever 434. The linkage cable 454 may be coupled to a drive axle 410 by a cable bracket 450. The cable bracket 450 may be configured to securely fix a protective outer housing of linkage cable 454 with respect to the drive axle 410, while allowing for movement of the attachment end 458 relative to the outer housing. Attachment end 458 may be coupled to an inner cable which is slidably inserted within the outer housing of the linkage cable 454.

In some examples, the linkage cable 454 may be understood to operate similarly as one or both of the park brake turn assist cables 232, 234 illustrated in FIGS. 2 A and 2B, respectively. Linkage cable 454 may operably couple the attachment end 458 of park brake actuator 400 to a steer detection apparatus similar to steer detection apparatus 350 (FIG. 3A).

Park brake actuator 400 may additionally comprise an adjustment mechanism 455. The adjustment mechanism 455 may be configured to adjust the actuation of park brake actuator 400, such as the position, range, angle, force, timing, or other operation associated with linkage cable 454. In some examples, adjustment mechanism 455 may comprise an adjustable screw or positional device mounted to cable bracket 450. Still further, adjustment mechanism 455 may be configured to secure the outer housing of linkage cable 454 to cable bracket 450, such as to adjust or control the location of attachment end 458 relative to the outer housing of linkage cable 454.

While adjustment mechanism 455 is illustrated as being mounted to linkage cable 454 at or near cable bracket 450, in other examples, an adjustment mechanism may be mounted to an opposite end of linkage cable 454, such as at or near cable bracket 360 (FIGS. 3A-3C). In other examples, an adjustment mechanism may be mounted to both ends of the linkage cable 454.

Brake lever 434 may comprise a park brake lever, similar to park brake lever 32 or park brake lever 34 illustrated in FIGS. 1, 2A and 2B. Brake lever 434 may be associated with a park brake system 430, and additionally, brake lever 434 may be rotationally coupled 435 to the drive axle 410.

In addition to linkage cable 454, brake lever 434 may be operably coupled to a park brake cable 444 by a park brake attachment end 448. In some examples, linkage cable 454 and park brake cable 444 may both be mounted to the same cable bracket 450. Still further, park brake cable 444 may be mounted to cable bracket 450 by a separate adjustment mechanism 445. By providing for separate cables and/or separate adjusting mechanisms, the various functions associated with the braking system 430 and the park brake actuator 400, such as the position, range, angle, force, timing, or other operation associated with linkage cable 454 and park brake cable 444, may be separately adjusted and/or controlled.

Park brake actuator 400 may be understood as being operational with a steer detection apparatus, such as steer detection apparatus 350 of FIGS. 3A and 3B. In some examples, park brake actuator 400 may be essentially non active during steering operations in which one or more steer wheel assemblies have not been turned past a threshold steering angle. For example, park brake actuator 400 may be configured to actuate the park brake system 430 only during relatively tight steering operations associated with a small vehicle turning radius.

The park brake cable 444 may be mechanically or hydraulically coupled to an operator braking control, such as a brake pedal or a parking brake lever. When either of the park brake cable 444 or the linkage cable 454 is activated, the relative movement of the attachment end 448 or attachment end 458, respectively, may cause the brake lever 434 to rotate 465 to a braking position. In some examples, the rotation of brake lever 434 may operate to engage the brakes associated with the braking system 430 in order to brake a drive wheel assembly 414 located on one side of the vehicle.

A separate brake lever similar to brake lever 434 may be located on another end of the drive axle 410 opposite drive wheel assembly 414. Additionally, a separate park brake actuator may be configured to actuate the other brake lever in a similar manner as described above, such that both drive wheel assemblies located at either end of the drive axle may be independently controlled and/or braked during one or more steering operations. In some examples, park brake actuator 400 may be configured to actuate the brake lever 434 and thereby engage the braking system 430 during a first steering operation, such as a right-hand turn of the vehicle. On the other hand, the park brake actuator located on the opposite end of the drive axle 410 may be configured to engage the braking system during a second steering operation, such as a left-hand turn of the vehicle.

Park brake actuator 400 may be configured to actuate the braking system 430 without requiring any explicit driver feedback or additional driver action beyond commanding the vehicle to turn. Still further, actuation of the brake assisted steering system may be achieved without relying on electronics, programming logic, or processing devices. Rather, the braking system 430 may operate to mechanically and/or automatically engage the inner drive wheel assembly 414, such as drive wheel assembly 414, located on the side of the vehicle associated with the direction of turn.

Still further, park brake actuator 400 may be configured not to interact with, depend upon, or otherwise interfere with the normal operation of the braking system 430 as it might relate to an operator or vehicle request to brake the vehicle or otherwise engage the brakes.

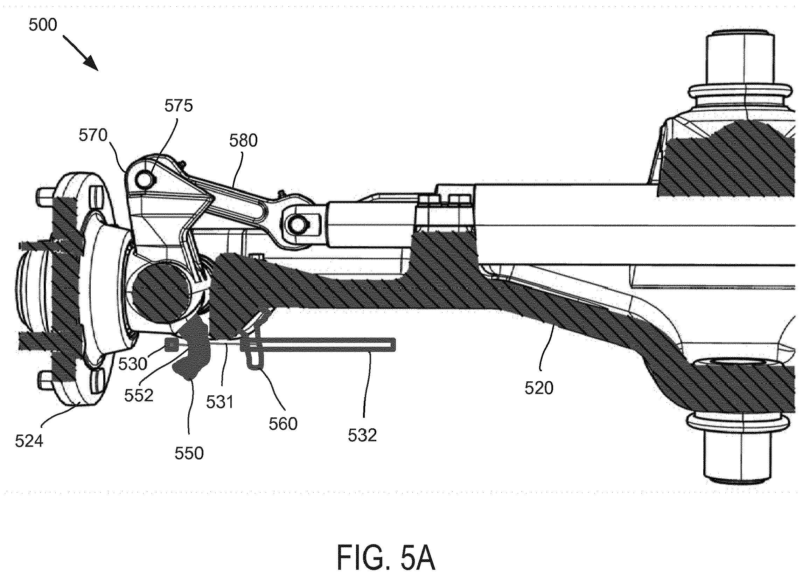

FIG. 5A illustrates another example park brake turn assist apparatus 500. For illustrative purposes, park brake turn assist apparatus 500 is shown in relation to a single steer wheel assembly 524 mounted to a steer axle 520. However, it should be understood that a second steer wheel assembly may be mounted on an opposite end of steer axle 520 and, in some examples, a second park brake turn assist apparatus configured similar to park brake turn assist apparatus 500 may be associated with the second steer wheel assembly.

Park brake turn assist apparatus 500 may comprise a steer detection apparatus 550 configured as a lever arm. Steer detection apparatus 550 may be coupled to a spindle 570. Additionally, steer detection apparatus 550 may be operably coupled to and/or be configured to come into contact with a first end 530 of a linkage cable 532. For example, steer detection apparatus 550 may comprise a contact surface 552 that is configured to contact the first end 530 of linkage cable 532 during one or more steering operations.

The linkage cable 532 may be coupled to the steer axle 520 by a cable bracket 560. The cable bracket 560 may be configured to securely fix a protective outer housing of linkage cable 532 with respect to the steer axle 520, while allowing for movement of the first end 530 relative to the outer housing. For example, first end 530 may be coupled to an inner cable 531 which is slidably inserted within the outer housing of the linkage cable 532. The steer detection apparatus 550 may comprise a finger bracket in which the inner cable 531 and first end 530 may be removably inserted. In other examples, inner cable 531 may pass through or slide within a through-hole provided in steer detection apparatus 550 in order to control the position of first end 530 relative to the contact surface 552.

The linkage cable 532 may be understood to operate similarly as one or both of the park brake turn assist cables 232, 234 illustrated in FIGS. 2 A and 2B, respectively, or as the linkage cable 232 of FIGS. 3A and 3B. For example, linkage cable 532 may operably couple steer detection apparatus 550 with a brake actuator as described above.

Steer wheel assembly 524 may be pivotally coupled to steer axle 520 by the spindle 570. The spindle 570 may in turn be coupled 575 to a tie rod 580. In some examples, tie rod 580 may be mechanically and/or hydraulically actuated to turn or pivot the steer wheel assembly 524 relative to the steer axle 520. The fixed cable housing of linkage cable 532 together with the extended inner cable 531 may be configured to maintain the position of first end 530 free from spindle movement and/or free from being pulled by steer detection apparatus 550 in all but the final range of angular motion of the steer wheel assembly 524, as described further herein.

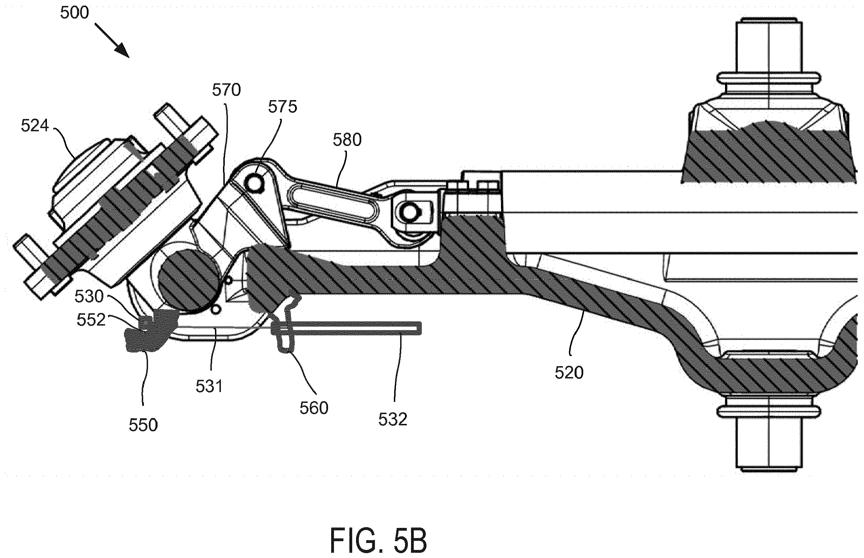

FIG. 5B illustrates the example park brake turn assist apparatus of FIG. 5A in a first steering operation. In the first steering operation, the steer wheel 524 may be understood to be turned to one side of the vehicle. Steering path 524L may be associated with a maximum steering angle, or with a threshold steering angle, relative to a neutral or non-steering position of the steer wheel assembly, and which may be understood with further reference to FIGS. 3A-3C.

In some examples, contact surface 552 may contact first end 530 of cable linkage 532 when the steer wheel assembly 524 is at the threshold steering angle. Contact surface 552 may continue to contact first end 530 while the steer wheel assembly 524 is rotated or otherwise located between the threshold steering angle and the maximum steering angle. For example, the first end 530 of linkage cable 532 may be pulled by steer detection apparatus 350 throughout the final range of rotation of spindle 570 during the steering operation.

As the first end 530 of linkage cable 532 is pulled, a park brake operably coupled to an opposite end of the linkage cable 532 may be configured to brake a drive wheel assembly. In some examples, the brakes may be engaged for a final range 545 of rotation of approximately ten or fewer degrees of angular displacement. In other examples, the brakes may be engaged for the final five or fewer degrees of angular displacement. In still other examples, a minimum amount of braking force may be applied at the threshold steering angle and a maximum amount of braking force is applied at the maximum steering angle.

The steer detection apparatus 550 may be configured to detect a steering angle associated with a steer wheel located on one side of the vehicle, e.g., the right-hand side, and the linkage cable 532 may operably link the steer detection apparatus 550 to a park brake actuator associated with a drive wheel assembly located on the opposite side of the vehicle, e.g., the left-hand side.

In some examples, the steer detection apparatus 550 may be configured to detect the first steering operation associated with a left-hand turn. In other examples, the steer detection apparatus 550 may be configured to detect the second steering operation associated with a right-hand turn. Still further, separate steer detection apparatus may be configured to alternately detect the first steering operation and the second steering operation, and as further described with respect to the examples illustrated at FIGS. 3A-3C.

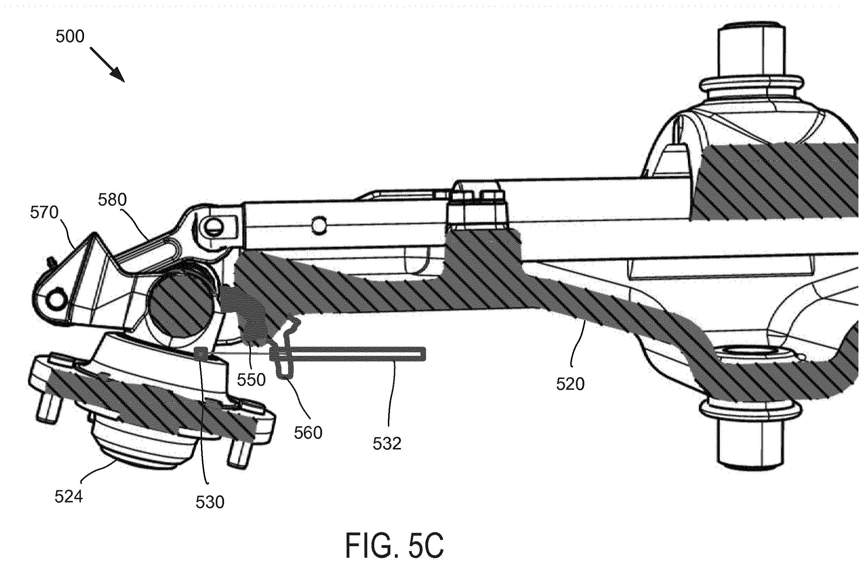

FIG. 5C illustrates the example park brake turn assist apparatus of FIG. 5A in a second steering operation. In the second steering operation, the steer wheel 524 may be understood to be turned in an opposite turn direction from that illustrated in FIG. 5B.

In the second steering operation, the spindle 570 and steer detection apparatus 550 may be understood to rotate towards cable bracket 560, such that steer detection apparatus 550 is not in contact with the first end 530 of linkage cable 532. As steer detection apparatus 550 is not exerting any rotational force on the first end 530 of linkage cable 532, the park brake turn assist apparatus 500 may be understood to remain in a non-actuated position. In the non-actuated position, the first end 530 of linkage cable 532 is not being pulled. Accordingly, it may be understood that a park brake operably coupled to the opposite end of the linkage cable 532 is not engaged. In some examples, as the spindle 570 rotates inward, steer detection apparatus 550 is free to sweep without contacting the linkage cable 532.

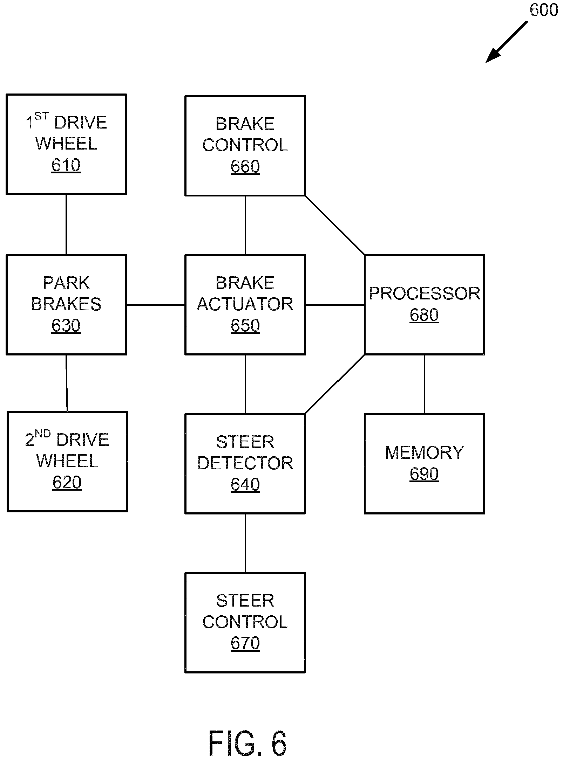

FIG. 6 illustrates a schematic example vehicle steering system 600 configured to provide brake assisted steering of a vehicle. Operator control of the steering system 600 may be achieved in response to a processing device 680 receiving one or more signals from steer detector 640 based on actuation of a steer control 670, such as an operator controlled steering wheel, steering lever, or other type of steer control. Additionally, processing device 680 may be configured to monitor further operating conditions and information about vehicle steering system 600 and/or the vehicle in general, including input received from a brake control 660, input indicting the vehicle speed, input indicating a request for vehicle acceleration, other types of input, or any combination thereof.

Steer detector 640 may comprise a position sensor that is configured to monitor the angular position of one or more steer wheel assemblies. In some examples, the steer detector 640 may comprise one or more levers, cams, arms, crank shafts, tie rods, proximity sensors, Hall Effect sensors, rotational sensors, other types of steer detectors or any combination thereof. The one or more steer wheel assemblies may be configured to turn in response to a request for steering received from the steer control 670. Based on one or more steering system inputs and/or vehicle inputs, processing device 680 may be configured to control the amount of braking force applied by park brakes 630, via brake actuator 650, to an inner drive wheel assembly.

The brake actuator 650 may be configured to actuate the park brakes 630 in direct response to a command provided by the steer detector 640. For example, steer detector 640 may be configured to detect an angular displacement of a steer wheel assembly relative to the steer axle. The angular displacement may correspond to a direction of turn of a vehicle.

In some examples, the brake actuator may be configured to brake the braking system 630 in response to the detected angular displacement. Still further, braking system 630 may be configured to brake first drive wheel assembly 610, independently from a second drive wheel assembly 620 mounted to the drive axle.

The angular displacement detected by steer detector 640 may comprise a threshold steering angle associated with a steer wheel assembly, and the steer detector 640 may be configured to detect when the angular displacement of the steer wheel assembly exceeds the threshold steering angle. Still further, the steer detector 640 may be configured to transmit a signal to brake actuator 650 indicating that one of more of the steer wheel assemblies has been turned to or past a threshold angular displacement. Memory 690 may be configured to store data corresponding to the threshold angular displacement and/or a maximum steering angle corresponding to the one or more steer wheel assemblies. Additionally, memory 690 may be configured to store multiple threshold angular displacements and/or maximum steering angles associated with the same steer wheel assembly according to different vehicle travel speeds.

In some examples, the threshold steering angle may comprise approximately five or fewer rotational degrees from the maximum steering angle of the steer wheel assembly. The park brakes 630 may be configured to continuously brake the first drive wheel assembly 610 when the steer wheel assembly is angularly displaced anywhere between the threshold steering angle and the maximum steering angle. In some examples, the park brakes 630 may be configured to engage both the first and second drive wheel assemblies in response to the operator pressing an emergency stop button or otherwise requesting that the parking brakes be engaged.

Processing device 680 may be configured to communicate with some or all of the components of vehicle steering system 600. The communication may comprise an electronic handshake in which the components provide an identifier or other type of confirmation that the components are compatible with vehicle steering system 600, such as in examples in which one or more components may be added to the vehicle as an after-market option. If any component fails to provide the expected handshake, processing device 680 may be configured to prohibit one or more vehicle operations until the components are verified.

Vehicle steering system 600 may use dedicated processor systems, micro controllers, programmable logic devices, microprocessors, or any combination thereof, to perform some or all of the operations described herein. Some of the operations described above may be implemented in software and other operations may be implemented in hardware. One or more of the operations, processes, and/or methods described herein may be performed by an apparatus, a device, and/or a system substantially similar to those as described herein and with reference to the illustrated figures.

Processing device 680 may execute instructions or "code" stored in memory 690. The memory 690 may store data as well. For example, voltage signals corresponding to a particular amount of braking force may be stored in memory 690 to provide a lookup table or data set which may be accessed by processing device 680. The processing device 680 may include an analog processor, a digital processor, a microprocessor, a multi-core processor, a processor array, a network processor, or the like. Additionally, processing device 680 may be part of an integrated control system or vehicle system manager, or may be provided as a portable electronic device that may be configured to interface with a networked system, locally and/or remotely, via a wireless transmission.

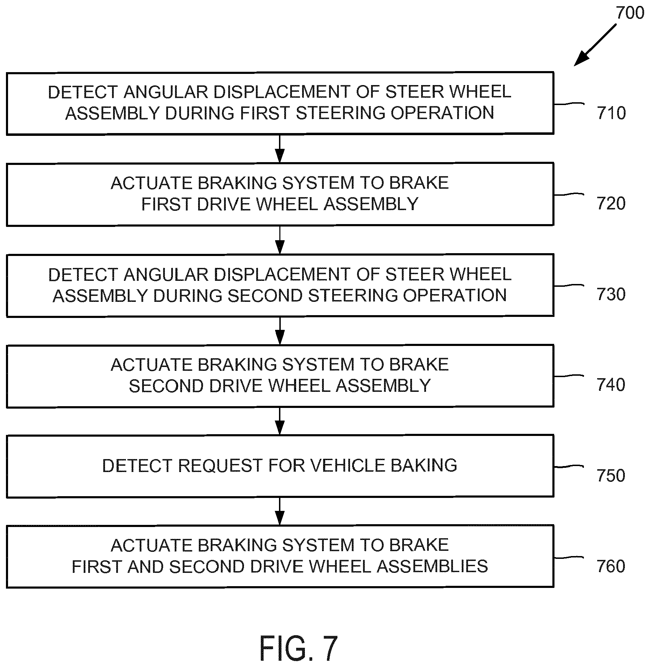

FIG. 7 illustrates an example process 700 of applying brake assisted steering for a vehicle comprising a steer axle and a drive axle. At operation 710, an angular displacement of a steer wheel assembly relative to the steer axle may be detected during a first steering operation. The angular displacement may correspond to a direction of turn of a vehicle.

In response to detecting the angular displacement of the steer wheel assembly, at operation 720 a braking system may be actuated to brake a first drive wheel assembly independently from a second drive wheel assembly mounted to the drive axle. The first drive wheel assembly may comprise an inner drive wheel assembly located on a side of the vehicle corresponding to the direction of turn. The first drive wheel assembly may be braked without braking the second drive wheel assembly.

In some examples, the steer axle is located proximate to a first end of the vehicle, and the drive axle is located proximate to a second end of the vehicle opposite the first end. A steer detection apparatus configured to detect the angular displacement of the steer wheel assembly may be operably coupled to the steer axle. Additionally, a brake actuator configured to actuate the braking system of the vehicle may be operably coupled to the drive axle, and a linkage assembly may operatively couple the steer detection apparatus to the brake actuator.

The brake actuator may comprise a first brake actuator configured to brake the first drive wheel assembly and a second brake actuator configured to brake the second drive wheel assembly. In some examples, the first drive wheel assembly may be braked in response to detecting the angular displacement of the first steer wheel assembly. The first steer wheel assembly may be located on an opposite side of the of the vehicle from the direction of turn, and the first brake actuator may be located proximate to the first steer wheel assembly.

At operation 730, a second steer detection apparatus may be configured to detect an angular displacement during a second steering operation. In some examples, the second steer detection apparatus may be configured to detect the angular displacement of a second steer wheel assembly. The linkage assembly may comprise a first cable that operably couples the steer detection apparatus to the first brake actuator and a second cable that operably couples the second steer detection apparatus to the second brake actuator.

The angular displacement of the steer wheel assembly during the second steering operation may be detected independently from the angular displacement of the steer wheel assembly during the first steering operation.

In response to detecting the angular displacement of the steer wheel assembly in the second steering operation, at operation 740 the second drive wheel assembly may be braked independently from the first drive wheel assembly.

At operation 750, a request for vehicle braking may be received. For example, the operator may press a brake pedal, pull a park brake lever, or pull an emergency park brake lever.

At operation 760, the braking system may be actuated to brake both the first and second drive wheel assemblies. In some examples, both of the drive wheel assemblies may be simultaneously braked regardless of the angular displacement of one or more steer wheel assemblies. For example, the request for vehicle braking at operation 750 may override a vehicle operation comprising brake assisted steering.

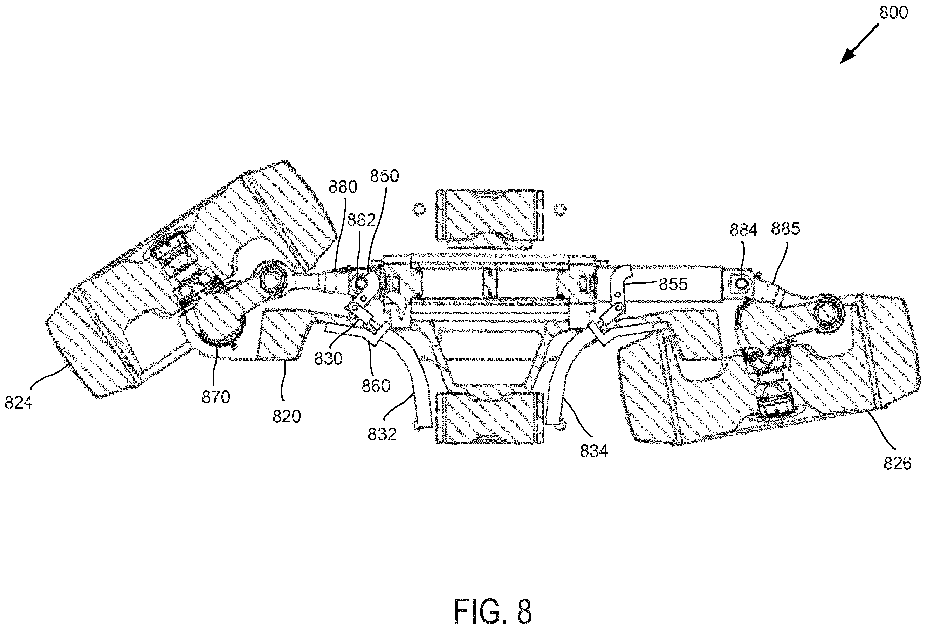

FIG. 8 illustrates an example park brake turn assist apparatus 800. Park brake assist brake turn assist apparatus 800 may comprise a first steer detection apparatus 850 configured as a lever arm or bell crank. The first steer detection apparatus 850 may be pivotally coupled to a steer axle 820. Additionally, first steer detection apparatus 850 may be coupled to a first end 830 of a first linkage cable 832. The first linkage cable 832 may be coupled to the steer axle 820 by a cable bracket 860. The cable bracket 860 may be configured to securely fix a protective outer housing of first linkage cable 832 with respect to the steer axle 820, while allowing for movement of the first end 830 relative to the outer housing. For example, first end 830 may be coupled to an inner cable which is slidably inserted within the outer housing of the first linkage cable 832.

In some examples, the first linkage cable 832 may be understood to operate similarly as one or both of the park brake assist brake turn assist cables 232, 234 illustrated in FIGS. 2 A and 2B, respectively. For example, first linkage cable 832 may operably couple first steer detection apparatus 850 with a brake actuator associated with a drive wheel located on an opposite side of the vehicle from the first steer wheel assembly 824.

The first steer wheel assembly 824 may be pivotally coupled to steer axle 820 by a spindle 870. The spindle 870 may in turn be coupled to a first tie rod 880. In some examples, first tie rod 880 may be mechanically and/or hydraulically actuated to turn or pivot the first steer wheel assembly 824 relative to the steer axle 820.

The example park brake turn assist apparatus 800 may be understood as being configured to provide a first steering operation. In the first steering operation, the first steer wheel 824 may be understood to be turned to a steering path. The steering path may be associated with a maximum steering angle, or with a threshold steering angle, relative to a neutral or non-steering position of the first steer wheel assembly 324. In some examples, the steering path may be associated with a left-hand turn of the vehicle.

The first tie rod 880 may comprise a first contact pin 882 configured to contact the first steer detection apparatus 850 during the steering operation. In some examples, the first contact pin 882 may contact the first steer detection apparatus 850 when the first steer wheel assembly 824 is at the threshold steering angle. The first contact pin 882 may continue to contact the first steer detection apparatus 850 while the first steer wheel assembly 824 is rotated or turned between the threshold steering angle and the maximum steering angle.

After initially making contact with steer detection apparatus 850, and as the first tie rod 880 continues to pull the first steer wheel assembly 824 during the steering operation, the first steer detection apparatus 850 may be configured to rotate about pivot 855 from an initial, or non-actuated position to the actuated position illustrated in FIG. 8. In the actuated position, the first steer detection apparatus 850 may be understood to pull the first end 830 of the first linkage cable 832. For example, the first end 830 of the first linkage cable 832 may be pulled throughout a final angular range of rotation of steer detection apparatus 850 during the steering operation.

As the first end 830 of the first linkage cable 832 is pulled, a park brake operably coupled to an opposite end of the first linkage cable 832 may be configured to brake a drive wheel assembly. In some examples, the brakes may be engaged for the final angular range of rotation of approximately ten or fewer degrees of angular displacement of the first steer wheel assembly 824. In other examples, the brakes may be engaged for the final five or fewer degrees of angular displacement. In still other examples, the brakes may be gradually engaged over the final angular range of rotation, such that a minimum amount of braking force is applied at the threshold steering angle and a maximum amount of braking force is applied at the maximum steering angle.

During the steering operation, a second tie rod 885 associated with a second steer wheel assembly may be understood to extend away from a second steer detection apparatus 855, such that a second contact pin 884 is not in contact with the second steer detection apparatus 855. As the second contact pin 884 is not exerting any force on the second steer detection apparatus 855, the second steer detection apparatus 855 may be understood to remain in the initial, or non-actuated position. In the non-actuated position, the first end of a second linkage cable 834 is not pulled by the second steer detection apparatus 855. Accordingly, it may be understood that a park brake operably coupled to the opposite end of the second linkage cable 834 is not engaged during the steering operation illustrated in FIG. 8.

On the other hand, during a second steering operation, such as a right-hand turn, the operation of the first steer detection apparatus 850 and the second steer detection apparatus 855 may be opposite to that described above. For example, the second contact pin 884 may engage the second steer detection apparatus 855 and cause the second linkage cable 834 to be pulled, whereas the first linkage cable 832 is not pulled by the first steer detection apparatus 850.

The above examples are provided for illustrative purposes only, and other types and/or combinations of sensors, systems, vehicles, and environmental parameters are contemplated herein. Although various examples described herein may relate to industrial vehicles such as forklifts, one or more of the examples system may also be used for electric-powered and/or hybrid vehicles such as golf carts, tractors, mobile cranes, off-highway vehicles, personal transportation vehicles, Automated Guided Vehicles (AGV), and other types of vehicles.

Having described and illustrated various examples herein, it should be apparent that other examples may be modified in arrangement and detail. We claim all modifications and variations coming within the spirit and scope of the following claims.

In the following preferred embodiments are described to facilitate a deeper understanding of the invention:
1. A vehicle steering system, comprising:
   a steer detection apparatus configured to detect a steered position of a steer wheel assembly relative to a steer axle, wherein the steered position corresponds to a direction of turn of a vehicle;
   a brake actuator configured to actuate a braking system of the vehicle, wherein the braking system is configured to brake a first drive wheel assembly independently from a second drive wheel assembly mounted to a drive axle, and wherein the first drive wheel assembly is located on a side of the vehicle corresponding to the direction of turn; and
   a linkage assembly operatively coupling the steer detection apparatus to the brake actuator, wherein in response to the steered position detected by the steer detection apparatus, the brake actuator actuates the braking system to brake the first drive wheel assembly.
2. The vehicle steering system of embodiment 1, wherein the steer axle is located proximate to a first end of the vehicle, and wherein the drive axle is located proximate to a second end of the vehicle opposite the first end.
3. The vehicle steering system of embodiment 2, wherein the steer detection apparatus is operably coupled to the steer axle, and wherein the brake actuator is operably coupled to the drive axle.
4. The vehicle steering system of embodiment 3, wherein the linkage assembly comprises one or more cables which substantially traverse an entire length between the steer axle and the drive axle, and wherein the one or more cables directly couple the steer detection apparatus to the brake actuator.
5. The vehicle steering system of embodiment 1, wherein the brake actuator comprises a first brake actuator configured to brake the first drive wheel assembly and a second brake actuator configured to brake the second drive wheel assembly, and wherein the linkage assembly comprises a cable that operably couples the steer detection apparatus to the first brake actuator to independently brake the first drive wheel assembly without braking the second drive wheel assembly.
6. The vehicle steering system of embodiment 5, wherein the steer detection apparatus is configured to detect the steered position of a first steer wheel assembly, wherein the system further comprises a second steer detection apparatus configured to detect a steered position of a second steer wheel assembly, and wherein the linkage assembly comprises a second cable that operably couples the second steer detection apparatus to the second brake actuator.
7. The vehicle steering system of embodiment 6, wherein the steered position of the second steer wheel assembly is detected independently from the steered position of the first steer wheel assembly, and wherein braking the first drive wheel assembly and braking the second drive wheel assembly are mutually exclusive braking events during a steering operation.
8. The vehicle steering system of embodiment 1, wherein the steered position comprises a threshold steering angle associated with the steer wheel assembly, and wherein the brake actuator is configured to actuate the braking system when the steered position of the steer wheel assembly exceeds the threshold steering angle.
9. The vehicle steering system of embodiment 8, wherein the threshold steering angle comprises approximately ten or fewer rotational degrees from a maximum steering angle of the steer wheel assembly, and wherein the braking system brakes the first drive wheel assembly when the steer wheel assembly is angularly displaced anywhere between the threshold steering angle and the maximum steering angle.
10. The vehicle steering system of embodiment 9, wherein the threshold steering angle comprises five or fewer rotational degrees from the maximum steering angle.
11. A method of steering a vehicle comprising a steer axle and a drive axle, the method, comprising:
   detecting a steered position of a steer wheel assembly relative to the steer axle, wherein the steered position corresponds to a direction of turn of a vehicle; and
   in response to detecting the steered position of the steer wheel assembly, actuating a braking system to brake a first drive wheel assembly independently from a second drive wheel assembly mounted to the drive axle, wherein the first drive wheel assembly is located on a side of the vehicle corresponding to the direction of turn.
12. The method of embodiment 11, wherein actuating the braking system comprises braking the first drive wheel assembly to a complete stop without braking the second drive wheel assembly.
13. The method of embodiment 11, wherein the steer axle is located proximate to a first end of the vehicle, wherein the drive axle is located proximate to a second end of the vehicle opposite the first end, wherein a steer detection apparatus configured to detect the steered position of the steer wheel assembly is operably coupled to the steer axle, wherein a brake actuator configured to actuate the braking system of the vehicle is operably coupled to the drive axle, and wherein a linkage assembly operatively couples the steer detection apparatus to the brake actuator.
14. The method of embodiment 13, wherein the brake actuator comprises a first brake actuator configured to brake the first drive wheel assembly and a second brake actuator configured to brake the second drive wheel assembly, wherein detecting the steered position of the steer wheel assembly comprises detecting the steered position of a first steer wheel assembly, and wherein actuating the braking system comprises braking the first drive wheel assembly in response to detecting the steered position of the first steer wheel assembly.
15. The method of embodiment 14, wherein the first steer wheel assembly is located on an opposite side of the of the vehicle from the direction of turn, and wherein the first brake actuator is located proximate to the first steer wheel assembly.
16. The method of embodiment 15, wherein a second steer detection apparatus is configured to detect a steered position of a second steer wheel assembly, and wherein the linkage assembly comprises a first cable that operably couples the steer detection apparatus to the first brake actuator and a second cable that operably couples the second steer detection apparatus to the second brake actuator.
17. The method of embodiment 16, further comprising:
   detecting the steered position of the second steer wheel assembly independently from the steered position of the first steer wheel assembly; and
   in response to detecting the steered position of the second steer wheel assembly, braking the second drive wheel assembly independently from the first drive wheel assembly.
18. An apparatus, comprising:
   means for detecting a steered position of a steer wheel assembly relative to the steer axle, wherein the steered position corresponds to a direction of turn of a vehicle; and
   means for actuating a braking system, in response to the detected steered position, to brake a first drive wheel assembly independently from a second drive wheel assembly mounted to the drive axle, wherein the first drive wheel assembly is located on a side of the vehicle corresponding to the direction of turn.
19. The apparatus of embodiment 18, wherein the steered position comprises a threshold steering angle associated with the steer wheel assembly, and wherein the means for detecting comprises means for detecting when the steered position of the steer wheel assembly exceeds the threshold steering angle.
20. The apparatus of embodiment 19, wherein the threshold steering angle comprises approximately ten or fewer rotational degrees from a maximum steering angle of the steer wheel assembly, and wherein the apparatus further comprises means for continuously braking the first drive wheel assembly when the steer wheel assembly is angularly displaced anywhere between the threshold steering angle and the maximum steering angle.

## Claims

1. A vehicle steering system, comprising:
a steer detection apparatus configured to detect a steered position of a steer wheel assembly relative to a steer axle, wherein the steered position corresponds to a direction of turn of a vehicle;
a brake actuator configured to actuate a braking system of the vehicle in response to the steered position detected by the steer detection apparatus, wherein the braking system is configured to brake a first drive wheel assembly independently from a second drive wheel assembly mounted to a drive axle, and wherein the first drive wheel assembly is located on a side of the vehicle corresponding to the direction of turn.

2. The vehicle steering system of claim 1, wherein a linkage assembly is operatively coupling the steer detection apparatus to the brake actuator.

3. The vehicle steering system of claim 1 or 2, wherein the steer axle is located proximate to a first end of the vehicle, and wherein the drive axle is located proximate to a second end of the vehicle opposite the first end, and wherein preferably the steer detection apparatus is operably coupled to the steer axle, and wherein preferably the brake actuator is operably coupled to the drive axle.

4. The vehicle steering system of one of the claims 2 or 3, wherein the linkage assembly comprises one or more cables which substantially traverse an entire length between the steer axle and the drive axle, and wherein the one or more cables directly couple the steer detection apparatus to the brake actuator.

5. The vehicle steering system of one of the claims 2 to 4, wherein the brake actuator comprises a first brake actuator configured to brake the first drive wheel assembly and a second brake actuator configured to brake the second drive wheel assembly, and wherein the linkage assembly comprises a cable that operably couples the steer detection apparatus to the first brake actuator to independently brake the first drive wheel assembly without braking the second drive wheel assembly.

6. The vehicle steering system of claim 5, wherein the steer detection apparatus is configured to detect the steered position of a first steer wheel assembly, wherein the system further comprises a second steer detection apparatus configured to detect a steered position of a second steer wheel assembly, and wherein the linkage assembly comprises a second cable that operably couples the second steer detection apparatus to the second brake actuator.

7. The vehicle steering system of claim 6, wherein the steered position of the second steer wheel assembly is detected independently from the steered position of the first steer wheel assembly, and wherein braking the first drive wheel assembly and braking the second drive wheel assembly are mutually exclusive braking events during a steering operation.

8. The vehicle steering system of one of the claims 1 to 7, wherein the steered position comprises a threshold steering angle associated with the steer wheel assembly, and wherein the brake actuator is configured to actuate the braking system when the steered position of the steer wheel assembly exceeds the threshold steering angle.

9. The vehicle steering system of claim 8, wherein the threshold steering angle comprises approximately ten or fewer, preferably five or fewer, rotational degrees from a maximum steering angle of the steer wheel assembly, and wherein the braking system brakes the first drive wheel assembly when the steer wheel assembly is angularly displaced anywhere between the threshold steering angle and the maximum steering angle.

10. A method of steering a vehicle comprising a steer axle and a drive axle, the method, comprising:
detecting a steered position of a steer wheel assembly relative to the steer axle, wherein the steered position corresponds to a direction of turn of a vehicle; and
in response to detecting the steered position of the steer wheel assembly, actuating a braking system to brake a first drive wheel assembly independently from a second drive wheel assembly mounted to the drive axle, wherein the first drive wheel assembly is located on a side of the vehicle corresponding to the direction of turn.

11. The method of claim 10, wherein actuating the braking system comprises braking the first drive wheel assembly to a complete stop without braking the second drive wheel assembly.

12. The method of claim 10 or 11, wherein the steer axle is located proximate to a first end of the vehicle, wherein the drive axle is located proximate to a second end of the vehicle opposite the first end, wherein a steer detection apparatus configured to detect the steered position of the steer wheel assembly is operably coupled to the steer axle, wherein a brake actuator configured to actuate the braking system of the vehicle is operably coupled to the drive axle, and wherein a linkage assembly operatively couples the steer detection apparatus to the brake actuator.

13. The method of claim 12, wherein the brake actuator comprises a first brake actuator, preferably located proximate to a first steer wheel assembly, configured to brake the first drive wheel assembly and a second brake actuator configured to brake the second drive wheel assembly, wherein detecting the steered position of the steer wheel assembly comprises detecting the steered position of the first steer wheel assembly, preferably located on an opposite side of the of the vehicle from the direction of turn, and wherein actuating the braking system comprises braking the first drive wheel assembly in response to detecting the steered position of the first steer wheel assembly.

14. The method of claim 12 or 13, wherein a second steer detection apparatus is configured to detect a steered position of a second steer wheel assembly, and wherein the linkage assembly comprises a first cable that operably couples the steer detection apparatus to the first brake actuator and a second cable that operably couples the second steer detection apparatus to the second brake actuator.

15. The method of claim 14, further comprising:
detecting the steered position of the second steer wheel assembly independently from the steered position of the first steer wheel assembly; and
in response to detecting the steered position of the second steer wheel assembly, braking the second drive wheel assembly independently from the first drive wheel assembly.
